# EUROPEAN PATENT SPECIFICATION

(11) **EP 2 040 397 B1**
(45) Date of publication and mention of the grant of the patent: **23.02.2011**
(21) Application number: 08734116.0
(22) Date of filing: 21.04.2008
(51) Int. Cl.: H04B 10/12, H04B 10/08

(54) **METHOD FOR MEASURING THE LENGTH OF OPTICAL FIBER, OPTICAL LINE TERMINAL AND OPTICAL NETWORK SYSTEM**
VERFAHREN ZUR MESSUNG DER LÄNGE EINER GLASFASER, OPTISCHES LEITUNGSENDGERÄT UND OPTISCHES NETZWERKSYSTEM
PROCÉDÉ DE MESURE DE LA LONGUEUR D'UNE FIBRE OPTIQUE, TERMINAL DE LIGNE OPTIQUE ET SYSTÈME DE RÉSEAU OPTIQUE

(30) Priority: 20.04.2007 CN 200710098197
(43) Date of publication of application: 25.03.2009
(73) Proprietor: Huawei Technologies Co., Ltd., Longgang District, Shenzhen Guangdong 518129 (CN)
(72) Inventor: SUI, Meng, Shenzhen Guangdong 518129 (CN); YANG, Sulin, Shenzhen Guangdong 518129 (CN); GAO, Hai, Shenzhen Guangdong 518129 (CN); WANG, Feng, Shenzhen Guangdong 518129 (CN)
(74) Representative: Körber, Martin Hans
(86) International application number: PCT/CN2008/070758
(87) International publication number: WO 2008/128478

(56) References cited:
- EP-A- 1 017 245
- EP-A- 1 855 397
- CN-A- 1 244 751
- CN-A- 1 383 276
- JP-A- 2004 064 494
- JP-A- 2006 013 894
- US-A1- 2002 171 895
- YANG LIU ET AL: "An Improved Dynamic Bandwidth Allocation Algorithm for GPON" PHOTONICS AND OPTOELECTRONICS, 2009. SOPO 2009. SYMPOSIUM ON, IEEE EXPRESS CONFERENCE PUBLISHING, PISCATAWAY, NJ, USA, 14 August 2009 (2009-08-14), pages 1-4, XP031524431 ISBN: 978-1-4244-4412-0

## Description

The application claims priority of Chinese Application No. 200710098197.7, filed April 20, 2007, titled "METHOD FOR MEASURING FIBER LENGTH, OPTICAL LINE TERMINAL AND OPTICAL NETWORK SYSTEM", the content of which is in its entirety.

The present invention relates to optical network technologies, in particular, to a technology for measuring fiber length

### BACKGROUND

At present, optical access technologies are developing along with the booming Digital Subscriber Line (DSL) technology in the Access Network (AN) field. In particular, the Passive Optical Network (PON) technology, as a point-to-multipoint optical access technology, is attracting people's eyes. A PON is composed of Optical Line Terminals (OLTs), Optical Network Units (ONUs) or Optical Network Terminals (ONTs), and an Optical Distribution Network (ODN). The ODN provides an optical splitting function and is composed of passive devices such as optical splitters. An OLT is located in a Central Office (CO). An ONU/ONT is located at the subscriber side and placed in a dwelling unit, or an enterprise unit, or a Multi-Dwelling Unit (MDU), or a Multi-Tenant Unit (MTU). The difference between an ONU and an ONT lies in that an ONT is located at the subscriber side but there are other networks such as an Ethernet between an ONU and subscribers.

Currently, typical PONs include Gigabit Passive Optical Networks (GPONs) and Ethernet Passive Optical Networks (EPONs).

Figure 1 shows the structure of a PON system. As shown in the figure, the PON system employs a tree topology structure. The PON is connected via a fiber with the central office and may be connected via dozens of or even more optical fibers with subscribers. As compared with point-to-point connections, the PON involves a low network construction cost.

In the PON system, an OLT needs to acquire the length of the fibers between itself and ONUs/ONTs, so as to exercise effective operation and maintenance of the PON system.

In the prior art, the following technical solution is adapted to measure the length of the fiber between an OLT and an ONU/ONT.

Figure 2 shows the flow chart of a method given in the prior art for measuring the length of the fiber between an OLT and an ONU/ONT. The method consists of the following steps.

In step 201, an OLT20 sends a ranging request message to an ONU/ONT21 and starts counting.

In step 202, upon receipt of the ranging request message, the ONU/ONT21 waits for a time that is the total processing delay of the ONU/ONT21, such as the sum of the Response Time, Pre-equalization delay, and start time defined in ITU-T G.984.

In step 203, when the total processing delay ends, the ONU/ONT21 returns a ranging response message to the OLT20. Upon receipt of the ranging response message, the OLT20 stops counting.

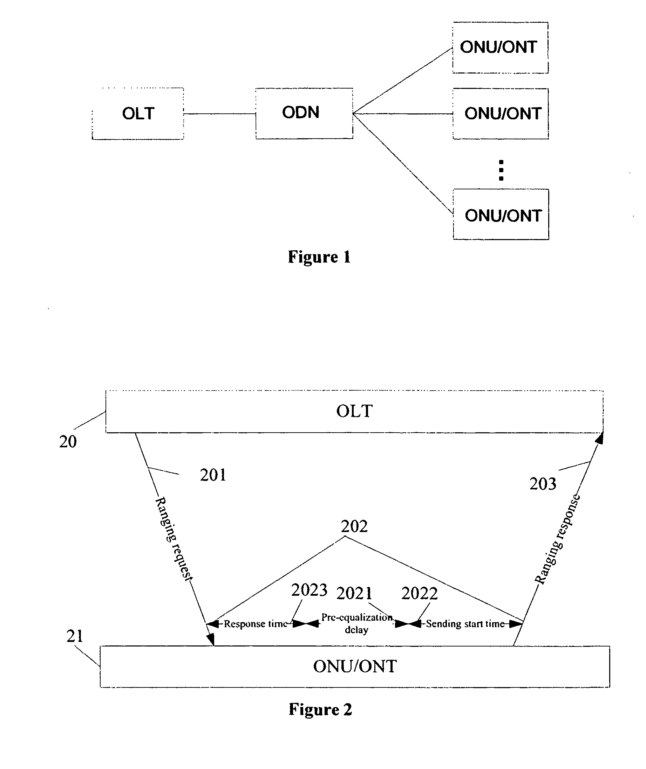

As shown in Figure 2, the counting duration, which is the duration obtained by time counting, is the sum of the total processing delay of the ONU/ONT21 and the round-trip time of a message transmitted between the OLT20 and the ONU/ONT21. The OLT20 may deduct the total processing delay of the ONU/ONT21 from the counting duration to obtain the round-trip time of a message transmitted between the OLT20 and the ONU/ONT21, divide the round-trip time by 2, and then multiple the results by the transmission speed of light in a fiber to acquire the length of the fiber between the OLT20 and the ONU/ONT21.

The total processing delay of the ONU/ONT21 is the sum of the waiting time assigned to the ONU/ONT21 and the response time of the ONU/ONT21. The waiting time assigned to the ONU/ONT21 refers to the delay assigned by the OLT20 to the ONU/ONT21 so that the uplink signal of the ONU/ONT21 arrives at the OLT20 with the correct phase to avoid communication conflicts. The OLT20 needs to assign a waiting time, such as the pre-equalization delay 2021 and the sending start time 2022 shown in Figure 2, to the ONU/ONT21. The response time of the ONU/ONT21 is the response time 2023 shown in Figure 2. The pre-equalization delay 2021 of the ONU/ONT21 may correspond to the Pre-equalization defined in ITU-T G.984.3, whereas the sending start time 2022 of the ONU/ONT21 may correspond to the SStart defined in ITU-T G.984.3. The two values are assigned by the OLT20. The response time 2023 of the ONU/ONT21 may be any value within the reference value range defined in the PON protocol. The reference value range is 35 ± 1 µs. Accordingly, the OLT20 may use any value within this reference value range as the approximate response time of the ONU/ONT21 to calculate the fiber length.

Obviously, the length of the fiber between the OLT20 and the ONU/ONT21 calculated according to the reference value range of the response time of the ONU/ONT21 defined in the PON protocol is not conducive to further operation and maintenance of the PON system.
Patent EP 1017245A refers to an optical transmission system including a station unit 1 and a remote unit, 21-2n, connected to the station unit 1. The station unit 1 includes a monitoring control cell processing means 108 executes the terminal processing for collecting a transmission line warning or a remote unit warning by a the input of upward monitoring control cells from the cell division means 103, generating a set delay value to the remote unit concerned on the basis of the distance measurement results input from the distance measurement control means 107.

### SUMMARY

The present invention provides a method for measuring fiber length, an optical line terminal, an optical network device, and an optical network system, so as to exactly measure the length of the fiber between an OLT and an ONU/ONT.

A method for measuring length of a fiber between an optical line terminal and an optical network device at a subscriber side according to an embodiment of the present invention, including: sending a ranging request message from the OLT to the optical network device at the subscriber side; receiving a ranging response responding to the ranging request message from the optical network device; determining a duration between a time when sending the ranging request message and a time when receiving the ranging response message; and obtaining an actual response time of the optical network device and a waiting time assigned by the optical line terminal to the optical network device so that an uplink signal of the optical network device arrives at the optical line terminal with a correct phase to avoid communication conflicts, wherein obtaining the actual response time comprises: receiving information including the actual response time reported by the optical network device, said information being carried in a message, and obtaining the actual response time from the message carrying the actual response time; calculating the length of the fiber based on the duration, the waiting time and the actual response time, wherein a total processing delay of the optical network device between receiving the ranging request message and transmitting the ranging response message is a sum of the actual response time and the waiting time.
The present invention provides an Optical Line Terminal (OLT), including a sending unit adapted to send a ranging request message to an optical network device at a subscriber side; a receiving unit adapted to receive a ranging response message responding to the ranging request message from the optical network device; an interpretation unit adapted to obtain an actual response time of the optical network device by interpreting a message carrying the actual response time of the optical network device from the optical network device; a time counting unit that is connected to both the sending unit and the receiving unit to determine a duration between sending the ranging request message and receiving the ranging response message; a computation unit that is connected to the time counting unit to calculate a length of the fiber between the OLT and the optical network device according to the duration obtained by the time counting unit, an actual total processing delay of the optical network device, wherein the actual total processing delay is composed of the actual response time of the optical network device and a waiting time, wherein the waiting time refers to a delay assigned by the optical line terminal to the optical network device so that an uplink signal of the optical network device arrives at the optical line terminal with a correct phase to avoid communication conflicts.

The present invention provides an optical network device, including a receiving unit, a response time acquisition unit, and a sending unit, wherein the receiving unit is adapted to receive a ranging request messages from an Optical Line Terminal (OLT); the response time acquisition unit is adapted to obtain an actual response time of the optical network device; the sending unit is adapted to send a ranging request message responding to the ranging request message and the actual response time of the optical network device to the OLT so that the optical line terminal calculates a length of a fiber between the optical line terminal and the optical network device according to the actual response time, wherein a total processing delay between receiving the ranging request message and sending the ranging response message is composed of the actual response time and a waiting time, wherein the waiting time refers to a delay assigned by the optical line terminal to the optical network device so that an uplink signal of the optical network device arrives at the optical line terminal with a correct phase to avoid communication conflicts.

The present invention provides an optical network system, including an optical Line Terminal (OLT) connected to an optical network device at a subscriber side, the optical line terminal is adapted to send a first message to the optical network device at the subscriber side, receive a second message that is a response to the first message from the optical network device at the subscriber side, determine a time duration between sending the first message and receiving the second message, calculate a length of the fiber to the optical network device at the subscriber side according to the duration and information related to the processing delay of the optical network device at the subscriber side, wherein the information related to the processing delay of the optical network device at the subscriber side comprises an actual response time of the optical network device at the subscriber side.

In the above technical solution according to the present invention, an OLT calculates the length of the fiber between itself and an ONU/ONT according to the actual response time of the ONU/ONT. The fiber length obtained through the calculation is quite precise. Therefore, the precision of the length of the fiber between an OLT and an ONU/ONT obtained through measurement according to the embodiments of the present invention is much higher than that of the prior art.

### BRIEF DESCRIPTION OF THE DRAWINGS

The following drawings are merely intended to further demonstrate and illustrate the present invention, but not to limit the scope of the present invention.

Figure 1 is a schematic diagram illustrating the structure of a PON system according to the prior art;

Figure 2 is a schematic diagram illustrating the ranging process according to the prior art;

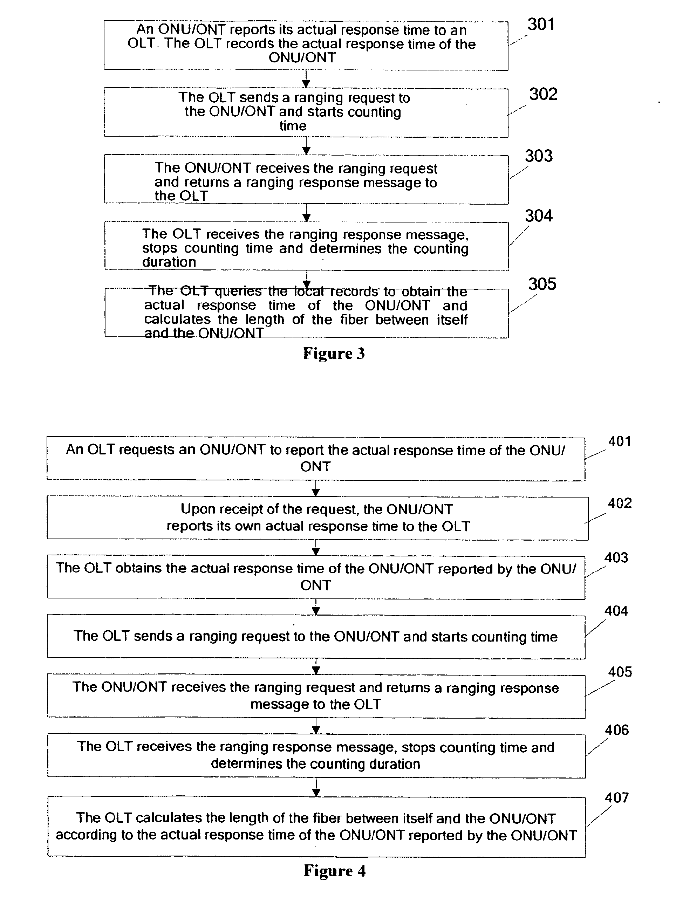

Figure 3 is a schematic flowchart illustrating a method for measuring fiber length according to Embodiment 3 of the present invention;

Figure 4 is a schematic flowchart illustrating a method for measuring fiber length according to Embodiment 4 of the present invention;

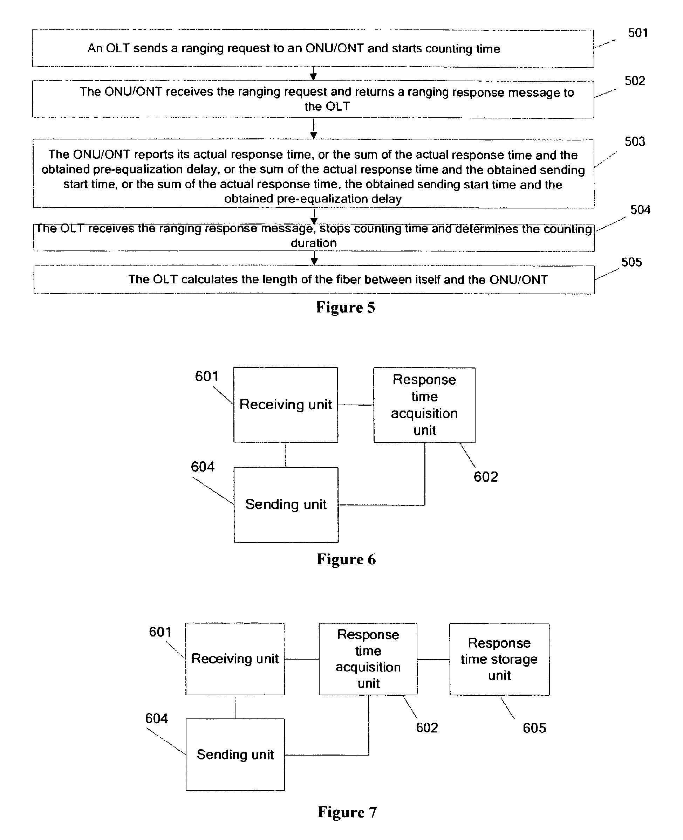

Figure 5 is a schematic flowchart illustrating a method for measuring fiber length according to Embodiment 5 of the present invention;

Figure 6 is a schematic diagram illustrating the structure of an ONU/ONT according to Embodiment 6 of the present invention;

Figure 7 is a schematic diagram illustrating the structure of another ONU/ONT according to Embodiment 6 of the present invention;

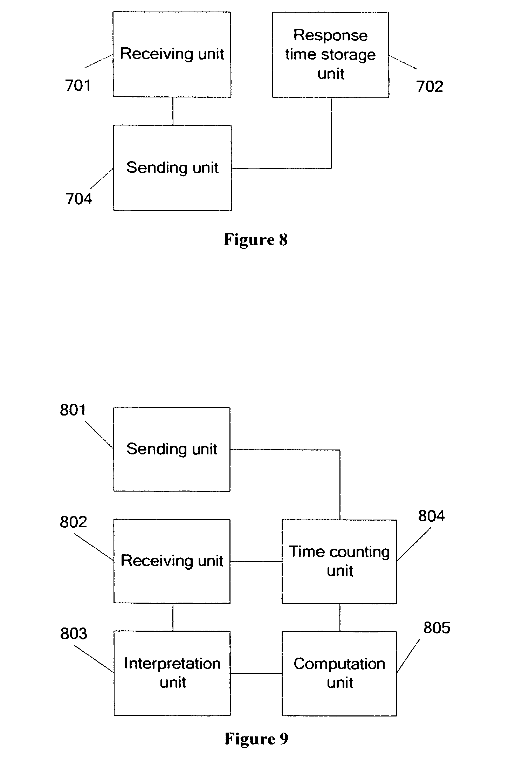

Figure 8 is a schematic diagram illustrating the structure of an ONU/ONT according to Embodiment 7 of the present invention;

Figure 9 is a schematic diagram illustrating the structure of an OLT according to Embodiment 8 of the present invention;

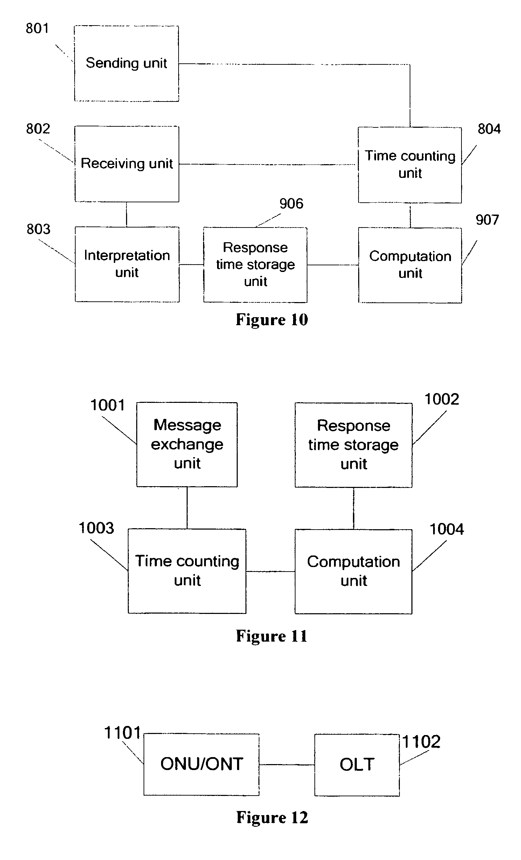

Figure 10 is a schematic diagram illustrating the structure of an OLT according to Embodiment 9 of the present invention;

Figure 11 is a schematic diagram illustrating the structure of an OLT according to Embodiment 10 of the present invention;

Figure 12 is a schematic diagram illstrating the structure of a communication system comprising an OLT provided according to Embodiment 11 of the present invention;

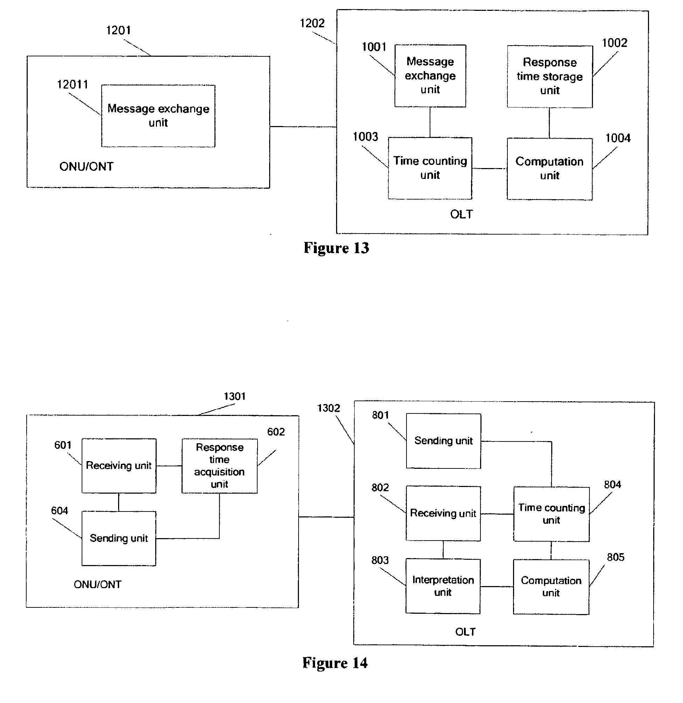

Figure 13 is a schematic diagram illustrating the structure of a communication system provided according to Embodiment 11 of the present invention and composed of an ONU/ONT provided according to the prior art and an OLT shown in Figure 11; and

Figure 14 is a schematic diagram illustrating the structure of a communication system provided according to Embodiment 11 of the present invention and composed of an ONU/ONT shown in Figure 6 and an OLT shown in Figure 9.

### DETAILED DESCRIPTION

The following drawings and embodiments are merely intended to further demonstrate and illustrate the present invention, but not to limit the scope of the present invention.

Embodiments 1 to 5 are about multiple methods for measuring fiber length according to the present invention.

### Embodiment 1

In Embodiment 1 of the present invention, the actual response time of an ONU/ONT connected to an OLT may be manually recorded in advance on the OLT after the system installation is completed. Specifically, the information recorded in advance on the OLT may be a mapping between the identifiers of the ONUs/ONTs and the actual response time of these ONUs/ONTs, so that the OLT may query the local records when necessary to obtain the actual response time of an ONU/ONT according to the identifier of the ONU/ONT.

After the above presetting, the same measurement method as in the prior art may be utilized to measure the duration that starts when the OLT sends a ranging request message and ends when the OLT receives a ranging response message from the ONU/ONT. Before calculating the length of the fiber between the OLT itself and the ONU/ONT, the OLT queries the local records to obtain the actual response time of the ONU/ONT. Then the OLT calculates the length of the fiber between itself and the ONU/ONT according to the actual response time of the ONU/ONT.

In Embodiment 1, the actual response time of each ONU/ONT connected to an OLT can be manually recorded in advance on the OLT, so that the OLT can query the local records to obtain the actual response time of each ONU/ONT. The OLT may calculate the length of the fiber between itself and the ONU/ONT according to the actual response time of the ONU/ONT. The obtained fiber length is precise. Therefore, compared with the method for measuring fiber length taking any response time value of the ONU/ONT within the error range defined by the protocol as the actual response time in the prior art, Embodiment 1 of the present invention can greatly improve the precision of the measured fiber length.

### Embodiment 2

Since the ONUs/ONTs with same brand and model have same actual response time, in Embodiment 2 of the present invention, the actual response time of the ONUs/ONTs with various brands and models can be manually recorded in advance on the OLT after the system installation is completed. Specifically, the information manually recorded on the OLT may be a mapping between the identifiers of various brands and models of the ONUs/ONTs and the actual response time of these ONUs/ONTs, so that the OLT can query the local records to obtain the actual response time of the ONUs/ONTs according to the identifiers after the ONUs/ONTs are registered.

With the above-mentioned information recorded in advance, the same measurement method as in the prior art can be utilized to measure the length of the fiber between an OLT and an ONU/ONT: a) The duration between the time when the OLT sends a ranging request message and the time when the OLT receives a ranging response message from the ONU/ONT is obtained; b) The OLT queries the local records to obtain the corresponding actual response time of the ONU/ONT; c) the OLT calculates the length of the fiber between itself and the ONU/ONT according to the actual response time of the ONU/ONT.

As mentioned previously, in Embodiment 2 of the present invention, the actual response times of ONUs/ONTs of various brands and models are recorded in advance on the OLT, such as a mapping between the identifiers of of ONUs/ONTs of various brands and models and the actual response time of the ONUs/ONTs, is recorded in advance on an OLT, so that the OLT can determine the actual response time of the ONUs/ONTs according to the identifiers of the ONTs/ONTs. The OLT may calculate the length of the fiber between itself and an ONU/ONT according to the actual response time of the ONU/ONT, so as to obtain the precise length of the fiber between itself and the ONU/ONT. Obviously, compared with the method for measuring fiber length taking any response time value of the ONU/ONT within the error range defined by the protocol as the actual response time in the prior art, Embodiment 2 of the present invention can greatly improve the measurement precision of fiber length.

In practical application, the response time is the same for the ONUs/ONTs having same brand and model. Therefore, the actual response time of an ONU/ONT can be obtained when the actual response time of the ONUs/ONTs having same brand and model is saved on an OLT. It is unnecessary to save the actual response time of all the ONUs/ONTs on the OLT. For this reason, as compared with the Embodiment 1, Embodiment 2 features slightly lower complexity in manual setting and slightly higher expandability.

### Embodiment 3

Figure 3 shows the flowchart of a method for measuring fiber length according to Embodiment 3 of the present invention. The method may include the following steps.

In step 301, an ONU/ONT reports its actual response time to an OLT. The OLT records the actual response time of the ONU/ONT.

The ONU/ONT may initiatively report its actual response time to the OLT after being successfully registered or upon receiving a request from the OLT. After receiving the packet reported from the ONU/ONT, the OLT records the actual response time of the ONU/ONT on itself.

Specifically, the ONU/ONT may query the local records to obtain its own actual response time and then report the response time to the OLT.

In the implementation of Embodiment 3 of the present invention, if the ONU/ONT does not locally record its own actual response time, the ONU/ONT may obtain its actual response time from its internal processing module and then report the actual response time to the OLT.

The method for the ONU/ONT reporting its actual response time to the OLT may include, but is not limited to, the following modes:

Mode 1: The actual response time of the ONU/ONT is carried in a Physical Layer Operation Administration and Maintenance (PLOAM) message sent to the OLT.

An unused field in a PLOAM message may be utilized to carry the actual response time of the ONU/ONT. Alternatively, the PLOAM message may be extended and the extended field may be used to carry the actual response time of the ONU/ONT. In addition, a new PLOAM message may be specially developed to carry the actual response time of the ONU/ONT. For instance, a PLOAM message shown in Table 1 may be defined to carry the actual response time of the ONU/ONT.

**Table 1 STRUCTURE of PLOAM message carrying the actual response time of an ONU/ONT**

| **Byte No.** | **Content** | **Description** |
|---|---|---|
| 1 | ONU/ONT identifier | Identifier of the ONU/ONT |
| 2 | PLOAM message type flag | Indicating that the message is adapted to report the response time of an ONU/ONT |
| 3 | Higher bits of the response time | Higher bits of the response time |
| 4 | Lower bits of the response time | Lower bits of the response time |
| 5-12 | Reserved | Reserved |

The actual response time of the ONU/ONT can be obtained by adding up the numeric value (in nanoseconds) composed of the higher bits of the response time (such as a binary value BBBBBBBB) and the lower bits of the response time (such as a binary value AAAAAAAABBBBBBBB) and the reference value. In the implementation of the present invention, the available message structure is not limited to the message structure described here but other message structures may also be employed. The reference value may be 35 µs or other values depending on the objects of the present invention.

The OLT may interpret the PLOAM message to obtain the actual response time of the ONU/ONT, and may locally record the actual response time of the ONU/ONT.

Mode 2: The actual response time of the ONU/ONT is carried in an Optical Network Unit Management and Control Interface (OMCI) message sent to the OLT.

Similarly, a new attribute may be added to the existing managed entities in an OMCI message to carry the actual response time of the ONU/ONT. Alternatively, the existing OMCI message may be extended to add a new managed entity to carry the actual response time of the ONU/ONT.

The OLT may interpret the OMCI message to obtain the actual response time of the ONU/ONT, and may locally record the actual response time of the ONU/ONT.

Mode 3: The ONU/ONT may send its own actual response time as a data packet to the OLT through a data channel, that is, the actual response time of the ONU/ONT is carried in the data to be sent to the OLT, or the actual response time is sent directly as data to the OLT.

The OLT may read the data packet to obtain the actual response time of the ONU/ONT and may locally record the actual response time of the ONU/ONT.

It should be noted that the response time reported by the ONU/ONT to the OLT may be as precise as a matter of nanoseconds. Therefore, the length of the fiber between the OLT and the ONU/ONT that is calculated based on the nanosecond-level precision of the response time is more precise than that calculated according to the prior art.

In step 302, the OLT sends a ranging request to the ONU/ONT and starts counting time.

To measure the length of the fiber from itself to the ONU/ONT, the OLT sends a ranging request to the ONU/ONT. The ranging request may be, but is not limited to a ranging request message (D/S frame) defined in ITU-T G.984. The OLT starts locally counting time while sending the ranging request.

The pre-equalization delay designated to the receiving end by the OLT and the sending start time may carry in the ranging request.

In step 303, the ONU/ONT receives the ranging request and returns a ranging response message to the OLT.

After receiving the ranging request message from the OLT, the ONU/ONT returns a ranging response message to the OLT after the actual response time of the ONU/ONT, the pre-equalization delay of the ONU/ONT, and the sending start time assigned by the OLT.

The pre-equalization delay may be the Pre-equalization assigned by the OLT and defined in ITU-T G.984, or may be specified by other means. The sending start time assigned by the OLT may be the SStart defined in ITU-T G.984 or specified by other means. The ranging response message returned by the OLT may be, but is not limited to the S/N response message defined in ITU-T G.984.

In step 304, the OLT receives the ranging response message, stops counting time and determines the counting duration.

The OLT receives the ranging response message from the ONU/ONT at the subscriber side, stops counting time after receiving the ranging response message, and determines the counting duration. The counting duration is the difference between the time when time counting is started and the time when time counting is stopped.

In step 305, the OLT queries the local records to obtain the actual response time of the ONU/ONT and calculates the length of the fiber between itself and the ONU/ONT.

The OLT may query the local records generated in step 301 to obtain the actual response time of the ONU/ONT, and may determine the pre-equalization delay of the ONU/ONT and the waiting time of the ONU/ONT. Therefore, the OLT can determine the total processing delay of the ONU/ONT, which is equal to the sum of the actual response time, the pre-equalization delay and the waiting time of the ONU/ONT.

The OLT may deduct the total processing delay of the ONU/ONT from the above-mentioned counting duration to obtain the round-trip time of a message transmitted between itself and the ONU/ONT, then divide the round-trip time by 2 to obtain the single-trip time of a message transmitted between itself and the ONU/ONT, and finally multiply the single-trip time by the transmission speed of light in a fiber to obtain the length of the fiber between itself and the ONU/ONT.

As can be seen from above, according to Embodiment 3 of the present invention, the ONU/ONT may report its exact response time to the OLT after being registered. The OLT locally records the exact response time reported by the ONU/ONT. During the ranging calculation, the OLT queries the local records to obtain the exact response time of the ONU/ONT and then calculates the length of the fiber between itself and the ONU/ONT according to the exact response time of the ONU/ONT.

In addition, in the technical solution of Embodiment 3 of the present invention, the ONU/ONT may report its exact response time in a message to the OLT after being registered. It is unnecessary to manually set the response time of the ONU/ONT on the OLT. Therefore, Embodiment 3 lowers the probability of errors that may occur during the manual setting in Embodiment 1 or 2 and thus reduces the labor cost.

In the method for measuring fiber length according to Embodiment 3, when a new ONU/ONT is added at the subscriber side, it suffices that the new ONU/ONT reports its own response time to the OLT after being registered. Extra manual setting is not required. Therefore, Embodiment 3 of the present invention is easier to implement than Embodiments 1 and 2.

In the method for measuring fiber length according to Embodiment 3, after receiving a response time from an ONU/ONT, an OLT locally records this response time. When receiving multiple response time from multiple ONUs/ONTs, the OLT records the actual response times of these ONUs/ONTs. Therefore, in order to measure the length of the fiber from itself to and the ONU/ONT, the OLT may directly query the local records to obtain the actual response time of the ONU/ONT.

### Embodiment 4

Figure 4 shows the flowchart of a method for measuring fiber length according to Embodiment 4 of the present invention. The method may include the following steps.

In step 401, an OLT requests an ONU/ONT to report the actual response time of the ONU/ONT.

Before measuring the length of the fiber between itself and the ONU/ONT, the OLT sends a message to the ONU/ONT, and requests the ONU/ONT to report the actual response time of the ONU/ONT.

The mode for sending the request mentioned in step 301 in Embodiment of the present invention may include but is not limited to the following three:
Mode 1: The request is carried in a PLOAM message to the ONU/ONT.
Mode 2: The request is carried in an OMCI message to the ONU/ONT.
Mode 3: The request is sent as a data packet via a data channel to the ONU/ONT.
For details about the modes, see the relevant descriptions in step 301 in Embodiment 3 of the present invention.

In step 402, upon receipt of the request, the ONU/ONT reports its own actual response time to the OLT.

After receiving the request, the ONU/ONT may query the local records to obtain its actual response time and then report the actual response time to the OLT.

Furthermore, if locally there is no actual response time of the ONU/ONT, the ONU/ONT may obtain its actual response time from its internal processing module in real time and then report the actual response time to the OLT.

The ONU/ONT may report its actual response time in one of the following (including but not limited to) three modes:
Mode 1: The actual response time is carried in a PLOAM message to the OLT.
Mode 2: The actual response time is carried in an OMCI message to the OLT.
Mode 3: The actual response time is sent as a data packet via a data channel to the OLT.

In step 403, the OLT obtains the actual response time of the ONU/ONT reported by the ONU/ONT.

The OLT receives the message reported by the ONU/ONT and then interprets the message to obtain the actual response time of the ONU/ONT.

In step 404, the OLT sends a ranging request to the ONU/ONT and starts counting time.

The OLT may perform step 404 directly after step 401 or after step 403.

The OLT sends a ranging request to the ONU/ONT. The ranging request may be a ranging request message (D/S frame) defined in the ITU G.984. While sending the ranging request, the OLT starts counting time locally.

In step 405, the ONU/ONT receives the ranging request and returns a ranging response message to the OLT.

In step 406, the OLT receives the ranging response message, stops counting time and determines the counting duration, just the same as step 304 in Embodiment 3 of the present invention.

In step 407, the OLT calculates the length of the fiber between itself and the ONU/ONT according to the actual response time of the ONU/ONT reported by the ONU/ONT, just the same as step 305 in Embodiment 3 of the present invention.

The calculation is almost the same as the calculation in step 305 in Embodiment 3 of the present invention, except for some differences in the technical solution. In Embodiment 3 of the present invention, the OLT needs to locally record the actual response times of each ONU/ONTs that are reported by the ONUs/ONTs after the ONUs/ONTs are registered. During each ranging, the OLT may query the local records to obtain the actual response times of the ONUs/ONTs so as to calculate the length of the fiber between itself and the ONUs/ONTs according to the actual response times of the ONUs/ONTs. In Embodiment 4 of the present invention, the OLT does not need to record and save the actual response times of each ONUs/ONTs. Instead, to measure the length of the fiber between itself and the ONU/ONT, the OLT requests the ONU/ONT to report its actual response time and then perform the calculation according to the actual response time reported by the ONU/ONT. Through the technical solution in Embodiment 4 of the present invention, the measured lengths of the fiber between the OLT and the ONUs/ONTs are more precise than that of the prior art.

Furthermore, Embodiment 4 of the present invention lowers the probability of errors that may occur during the manual setting in Embodiment 1 or 2 and thus reduces the labor cost. The method according to Embodiment 4 of the present invention also features higher expandability.

According to Embodiment 4 of the present invention, an OLT sends a message to an ONU/ONT to request the ONU/ONT to report the actual response time of the ONU/ONT before measuring the length of the fiber between itself and the ONU/ONT. In practical application, however, the OLT may request an ONU/ONT to report the actual response time of the ONU/ONT at any time before step 407 after the OLT itself and the ONU/ONT run normally.

### Embodiment 5

Figure 5 shows the flowchart of a method for measuring fiber length according to Embodiment 5 of the present invention. The method may include the following steps.

In step 501, the OLT sends a ranging request to the ONU/ONT and starts counting time.

just the same as step 302 in Embodiment 3 of the present invention.

In step 502, the ONU/ONT receives the ranging request and returns a ranging response message to the OLT, just the same as step 303 in Embodiment 3 of the present invention. Step 502 may be performed before or after the step 503.

After receiving the ranging request from the OLT, the ONU/ONT may interpret the ranging request to obtain the pre-equalization delay and the sending start time carried in the ranging request.

In step 503, the ONU/ONT reports its actual response time, or the sum of the actual response time and the obtained pre-equalization delay, or the sum of the actual response time and the obtained sending start time, or the sum of the actual response time, the obtained sending start time and the obtained pre-equalization delay.

In the specific implementation of Embodiment 5 of the present invention, the step 503 is similar to step 301 in Embodiment 3. The ONU/ONT may query the local records to obtain its actual response time, or obtain the actual response time from its internal processing module in real time when its actual response time is not locally recorded.

After obtaining its actual response time, the pre-equalization delay assigned by the OLT and the sending start time, the ONU/ONT may report its actual response time, or the sum of its actual response time and the obtained pre-equalization delay, or the actual response time and the obtained sending start time, or the sum of the actual response time, the obtained sending start time and the obtained pre-equalization delay to the OLT in a way described in step 301 in Embodiment 3 of the present invention:
- The above information sent to the OLT may be carried in a PLOAM message, or an OMCI message, or a data packet sent via a data channel to the OLT.

In step 504, the OLT receives the ranging response message, stops counting time and determines the counting duration, just the same as step 304 in Embodiment 3 of the present invention.

In step 505, the OLT calculates the length of the fiber between itself and the ONU/ONT.

The OLT calculates the length of the fiber between itself and the ONU/ONT according to the reported actual response time of the ONU/ONT, or the sum of the actual response time of the ONU/ONT and the pre-equalization delay, or the sum of the actual response time of the ONU/ONT and the sending start time, or the sum of the actual response time of the ONU/ONT, the sending start time and the pre-equalization delay, plus the duration obtained in step 504.

If the ONU/ONT reports the sum of its actual response time and the obtained pre-equalization delay in step 503, the OLT may calculate the sum of the actual response time of the ONU/ONT, the pre-equalization delay and the sending start time according to the reported information and the sending start time that is assigned to the ONU/ONT to obtain the total processing delay of the ONU/ONT. Then the OLT deducts the total processing delay of the ONU/ONT from the counting duration to obtain the round-trip time of a message transmitted between itself and the ONU/ONT, then divides the round-trip time by 2 to obtain the single-trip time of a message transmitted between itself and the ONU/ONT, and finally multiplies the single-trip time by the transmission speed of light in a fiber to obtain the length of the fiber between itself and the ONU/ONT.

If the ONU/ONT reports the sum of its actual response time and the assigned sending start time in step 503, the OLT may calculate the sum of the actual response time of the ONU/ONT, the sending start time and the pre-equalization delay according to the reported information and the pre-equalization delay that is assigned to the ONU/ONT to obtain the total processing delay of the ONU/ONT. Then the OLT calculates the length of the fiber between itself and the ONU/ONT according to the total processing delay of the ONU/ONT, the counting duration of the OLT itself, and the transmission speed of light in a fiber.

If the ONU/ONT reports the sum of its actual response time, the assigned pre-equalization delay and the assigned sending start time in step 503, the OLT may calculate the sum of the three given in the reported information to obtain the total processing delay of the ONU/ONT. Then the OLT calculates the length of the fiber between itself and the ONU/ONT according to the total processing delay of the ONU/ONT, the counting duration of the OLT itself, and the transmission speed of light in a fiber.

As can be seen from above, in Embodiment 5 of the present invention, after sending a ranging request in step 501 but before the ranging calculation in step 505, the OLT may calculate the length of the fiber between itself and the ONU/ONT according to the message from the ONU/ONT that carries the sum of the actual response time of the ONU/ONT and the pre-equalization delay, or the sum of the actual response time of the ONU/ONT and the sending start time, or the sum of the actual response time of the ONU/ONT, the sending start time and the pre-equalization delay, Obviously, compared with the method for measuring fiber length taking any response time value of the ONU/ONT within the error range defined by the protocol as the actual response time in the prior art, Embodiment 5 of the present invention can greatly improve the measurement precision of fiber length.

Furthermore, according to Embodiment 5 of the present invention, the ONU/ONT may report the sum of its actual response time and the obtained pre-equalization delay, or the sum of the actual response time and the obtained sending start time, or the sum of the actual response time, the obtained sending start time and the pre-equalization delay to the OLT after receiving a ranging request from the OLT. Manual setting of the information is not required on the OLT. Therefore, Embodiment 5 of the present invention lowers the probability of errors that may occur during the manual setting in Embodiment 1 or 2 and thus reduces the labor cost.

Furthermore, just the same as Embodiment 3 and Embodiment 4, Embodiment 5 of the present invention provides a method of higher expandability for measuring fiber length than Embodiments 1 and 2 of the present invention.

Those skilled in the art should understand that all or some of the steps in the methods for measuring fiber length according to the above-mentioned embodiments may be performed by a program instructing the relevant hardware. The program may be stored in an accessible storage media in a computer and may perform the following steps:
- the OLT exchanges messages with the ONU/ONT to determine the message exchange duration;
- The OLT determines the length of the fiber between itself and the ONU/ONT according to the message exchange duration, the actual response time of the ONU/ONT, the pre-equalization delay assigned by the OLT to the ONU/ONT, and the sending start time.

The above-mentioned storage media may be a ROM/RAM, magnetic disk, CD or other similar media.

The following detailed descriptions are about the ONU/ONT in the embodiments of the present invention (Embodiments 6 and 7 are taken as an example).

### Embodiment 6

Figure 6 shows a schematic structure of an ONU/ONT according to Embodiment 6 of the present invention, which may include a receiving unit 601, a response time acquisition unit 602, and a sending unit 604.

The receiving unit 601 is adapted to receive messages from an OLT. The OLT may send a ranging request message to the ONU/ONT, or a request message to the ONU/ONT to request the ONU/ONT to report the actual response time of the ONU/ONT.

The response time acquisition unit 602 is adapted to obtain the actual response time of the ONU/ONT. The response time acquisition unit 602 may obtain the actual response time of the ONU/ONT from, but not limited to, a local chip interface.

The sending unit 604 is adapted to send a response message to the OLT. The response message may be one of the following:
- A message that carries the actual response time of the ONU/ONT;
- A message that carries the sum of the actual response time and the pre-equalization delay assigned by the OLT;
- A message that carries the sum of the actual response time and the sending start time assigned by the OLT;
- A message that carries the sum of the actual response time, the pre-equalization delay assigned by the OLT, and the sending start time;
- A ranging response message returned to the OLT to respond to the received ranging request message.

The sending unit 604 may report the actual response time, or the sum of the actual response time and the pre-equalization delay, or the sum of the actual response time and the sending start time, or the sum of the actual response time, the sending start time and the pre-equalization delay in a PLOAM message, or an OMCI message, or a data packet via a data channel to the OLT. For details, see the relevant descriptions in step 301 in Embodiment 3 of the present invention.

Furthermore, the sending unit 604 may send a message that carries the actual response time to the OLT according to the request from the OLT received by the receiving unit 601, or may initiate a message that carries the actual response time to the OLT after the ONU/ONT is successfully registered, depending on the pre-defined communication protocol.
As shown in Figure 7, the ONU/ONT in Embodiment 6 of the present invention may further include a response time storage unit 605adapted to store the actual response time of the ONU/ONT.
The response time acquisition unit 602 may query the response time storage unit 605 to obtain the actual response time of the ONU/ONT.

As can be seen from above, the ONU/ONT in Embodiment 6 of the present invention may read the actual response time of the ONU/ONT in real time and then send a message that carries the actual response time of the ONU/ONT to the OLT, so that the OLT can obtain the response time of the ONU/ONT to calculate the length of the fiber from the OLT itself to the ONU/ONT.

Furthermore, the ONU/ONT in Embodiment 6 of the present invention can report its actual response time in a message to the OLT. Manual setting is not required on the OLT. Therefore, Embodiment 6 of the present invention avoids the errors that may occur during manual setting and thus reduces the labor cost.

Furthermore, when a new ONU/ONT is added at the subscriber side, it is only necessary to report the actual response time of the new ONU/ONT to the OLT. Extra manual setting is not required. Therefore, it is more convenient to apply the ONU/ONT in Embodiment 6 of the present invention.

### Embodiment 7

Figure 8 shows a schematic structure of an ONU/ONT according to Embodiment 7 of the present invention, which may include a receiving unit 701, a response time storage unit 702 and a sending unit 704.

The receiving unit 701 is adapted to receive messages from the OLT. The OLT may send a ranging request message to the ONU/ONT, or a request message to the ONU/ONT to request the ONU/ONT to report the actual response time of the ONU/ONT.

The response time storage unit 702 is adapted to store the actual response time of the ONU/ONT. The ONU/ONT may record its actual response time in the response time storage unit 702.

The response time storage unit 702 may be, but is not limited to, a Flash or other similar storage unit.

The actual response time stored in the response time storage unit 702 may be pre-stored by the manufacture or may be stored after being read out from a chip interface of the ONU/ONT.

The sending unit 704 is adapted to send messages to the OLT. The messages sent by the sending unit 704 to an OLT may be one of the following:
a message that carries the actual response time of the ONU/ONT;
a message that carries the sum of the actual response time and the pre-equalization delay assigned by the OLT;
a message that carries the sum of the actual response time and the sending start time assigned by the OLT;
a message that carries the sum of the actual response time, the pre-equalization delay assigned by the OLT, and the sending start time;
a ranging response message returned to the OLT to respond to the received ranging request message.

The above-mentioned actual response time is the actual response time of the ONU/ONT stored in the response time storage unit 702.

The sending unit 704 may report the information relating to the processing delay of the ONU/ONT to the OLT. The information includes the actual response time of the ONU/ONT, or the sum of the actual response time and the pre-equalization delay, or the sum of the actual response time and the sending start time, or the sum of the actual response time, the sending start time and the pre-equalization delay. The information relating to the processing delay of the ONU/ONT may be sent in a PLOAM message, or an OMCI message, or a data packet via a data channel to the OLT. For details, see the relevant descriptions in step 301 in Embodiment 3 of the present invention.

Furthermore, the sending unit 704 may send a message that carries the actual response time to the OLT according to a request from the OLT received by the receiving unit 701, or may initiate a message that carries the actual response time to the OLT after the ONU/ONT is successfully registered, depending on the pre-defined communication protocol.

Just the same as in Embodiment 6 of the present invention, the ONU/ONT in Embodiment 7 of the present invention may read the actual response time of the ONU/ONT itself in real time and then send a message that carries the actual response time to the OLT, so that the OLT can obtain the response time of the ONU/ONT to calculate the exact length of the fiber from the OLT itself to the ONU/ONT.

Furthermore, the ONU/ONT in Embodiment 7 of the present invention can report its actual response time in a message to the OLT. Manual setting is not required on the OLT. Therefore, Embodiment 7 of the present invention avoids the errors that may occur during manual setting and thus reduces the labor cost.

Furthermore, when a new ONU/ONT is added at the subscriber side, it is only necessary to report the actual response time of the new ONU/ONT to the OLT. Extra manual setting is not required. Therefore, it is more convenient to apply the ONU/ONT in Embodiment 7 of the present invention.

It should be noted that the ONU/ONT in Embodiment 7 of the present invention may be in a form of hardware or a software function module. The device in Embodiment 7 of the present invention may be sold or used as an independent product, or may be stored in an accessible storage media in a computer.

The following detailed descriptions are about the OLT in the embodiments of the present invention (Embodiments 8, 9 and 10 are taken as an example).

### Embodiment 8

Figure 9 shows a schematic structure of an OLT according to Embodiment 9 of the present invention, which may include a sending unit 801, a receiving unit 802, an interpretation unit 803, a time counting unit 804 and a computation unit 805.

The sending unit 801 is adapted to send messages to the ONUs/ONTs. The sending unit 801 may send a ranging request message to the ONUs/ONTs, requesting the ONUs/ONTs to report the actual response time of themselves.

The receiving unit 802 is adapted to receive messages reported by ONUs/ONTs. The receiving unit 802 may receive one of the following messages reported by the ONUs/ONTs:
a ranging response message returned by the ONU/ONT;
a message that carries the actual response time of the ONU/ONT;
a message that carries the sum of the actual response time of the ONU/ONT and the pre-equalization delay assigned by the OLT to the ONU/ONT;
a message that carries the sum of the actual response time of the ONU/ONT and the sending start time assigned by the OLT to the ONU/ONT; and
a message that carries the sum of the actual response time of the ONU/ONT, the pre-equalization delay assigned by the OLT to the ONU/ONT, and the sending start time.

As mentioned above, the message that carries the actual response time of the ONU/ONT, or the message that carries the sum of the actual response time of the ONU/ONT and the pre-equalization delay, or the message that carries the sum of the actual response time of the ONU/ONT and the sending start time, or the message that carries the sum of the actual response time of the ONU/ONT, the pre-equalization delay, and the sending start time may be, but is not limited to, a PLOAM message, or an OMCI message, or a data packet sent via a data channel.

The interpretation unit 803 is adapted to:
interpret a message carrying the actual response time of the ONU/ONT received by the receiving unit 802, so as to obtain the actual response time of the ONU/ONT; or
interpret a message carrying the sum of the actual response time of the ONU/ONT and the pre-equalization delay assigned by the OLT to the ONU/ONT received by the receiving unit 802 so as to obtain the sum of the actual response time of the ONU/ONT and the pre-equalization delay; or
interpret a message carrying the sum of the actual response time of the ONU/ONT and the sending start time assigned by the OLT to the ONU/ONT received by the receiving unit 702, so as to obtain the sum of the actual response time of the ONU/ONT and the sending start time; or
interpret a message carrying the sum of the actual response time of an ONU/ONT, the pre-equalization delay assigned by the OLT to the ONU/ONT, and the sending start time received by the receiving unit 702, so as to obtain the sum of the actual response time of the ONU/ONT, the pre-equalization delay, and the sending start time.

The time counting unit 804 is adapted to count the time and determine the counting duration.

When the sending unit 801 sends a ranging request to the ONU/ONT, the time counting unit 804 starts counting time. When the receiving unit 802 receives a ranging response message from the ONU/ONT, the time counting unit 804 stops counting time. The counting duration equals the difference between the start time of time counting and the end time of time counting.

The computation unit 805 is adapted to calculate the length of the fiber between the OLT and the ONU/ONT as follows: deducting the total processing delay of the ONU/ONT from the counting duration determined by the time counting unit 804 to obtain a certain value, dividing the value by 2, and then multiplying the result by the transmission speed of light in a fiber (the transmission speed for example, is 2 × 10⁸) to obtain the length of the fiber between the OLT and the ONU/ONT.

The total processing delay of the ONU/ONT is the sum of the actual response time of the ONU/ONT, the pre-equalization delay of the ONU/ONT that is already known to the OLT, and the sending start time of the ONU/ONT that is already known to the OLT. The pre-equalization delay of the ONU/ONT and the sending start time of the ONU/ONT are the processing delay assigned by the OLT to the ONU/ONT. The total processing delay of the ONU/ONT can be determined as follows:
If the interpretation unit 803 interprets the message previously mentioned and obtains the actual response time of the ONU/ONT, the computation unit 805 may add up the obtained actual response time of the ONU/ONT, the known pre-equalization delay assigned by the OLT to the ONU/ONT, and the sending start time to obtain the total processing delay of the ONU/ONT;
If the interpretation unit 803 interprets the message previously mentioned and obtains the sum of the actual response time of the ONU/ONT and the pre-equalization delay, the computation unit 805 may add up the sum of the actual response time of the ONU/ONT and the pre-equalization delay, and the known sending start time that the OLT assigns to the ONU/ONT to obtain the total processing delay of the ONU/ONT;
If the interpretation unit 803 interprets the message previously mentioned and obtains the sum of the actual response time of the ONU/ONT and the sending start time, the computation unit 805 may add up the sum of the actual response time of the ONU/ONT and the sending start time, and the known pre-equalization delay that the OLT assigns to the ONU/ONT to obtain the total processing delay of the ONU/ONT;
If the interpretation unit 803 interprets the message previously mentioned and obtains the sum of the actual response time of the ONU/ONT, the pre-equalization delay and the sending start time, the computation unit 805 may directly obtain the total processing delay of the ONU/ONT from the value obtained after the interpretation unit 803 interprets the message.

As can be seen from above, the computation unit 805 of the OLT in Embodiment 8 of the present invention calculates the exact length of the fiber between the OLT and the ONU/ONT according to the actual total processing delay of the ONU/ONT. The actual total processing delay of the ONU/ONT is composed of the actual response time of the ONU/ONT, the pre-equalization delay assigned by the OLT to the ONU/ONT, and the sending start time. Compared with the OLT in the prior art that calculates the length of the fiber between itself and the ONU/ONT using an approximate value of the actual response time within the error range defined by the protocol, the OLT in Embodiment 8 of the present invention calculates the length of the fiber between itself and the ONU/ONT in a more precise way.

Furthermore, the interpretation unit 803 of the OLT in Embodiment 8 of the present invention can obtain the exact response time of an ONU/ONT, or the sum of the actual response time and the sending start time, or the actual response time and the pre-equalization, or the sum of the actual response time, the pre-equalization delay and the sending start time from the message received by the receiving unit 802. The OLT can calculate the length of the fiber between itself and the ONU/ONT based on the obtained information. Manual setting is not required on the OLT. Therefore, Embodiment 8 of the present invention avoids the errors that may occur during manual setting and thus reduces the labor cost.

### Embodiment 9

Figure 10 shows a schematic structure of an OLT according to Embodiment 9 of the present invention. As shown in Figure 10, the OLT differs from the OLT in Embodiment 8 of the present invention in
an interpretation unit 803 purposed to interpret a message that is received by the receiving unit 802 and carries the actual response time of an ONU/ONT so as to obtain the actual response time of the ONU/ONT.

The OLT in Embodiment 9 of the present invention may further include a response time storage unit 906 and a computation unit 907.

The response time storage unit 906 is adapted to store the information relating to the processing delay of the ONU/ONT that is obtained after the interpretation unit 803 interprets the message previously mentioned. The information relating to the processing delay includes the actual response time of the ONU/ONT.

The computation unit 907 is adapted to calculate the length of the fiber between the OTL itself and the ONU/ONT. During the calculation, the computation unit 907 adds up the actual response time of the ONU/ONT stored in the response time storage unit 806, the known pre-equalization delay assigned by the OLT to the ONU/ONT, and the known sending start time assigned by the OLT to the ONU/ONT to obtain the total processing delay of the ONU/ONT, deducts the total processing delay of the ONU/ONT from the counting duration determined by the time counting unit 804 to obtain a value, then divides the value by 2, and finally multiplies the result by the transmission speed of light in a fiber (the transmission speed is, for example, 2 × 10⁸) to obtain the length of the fiber between the OLT and the ONU/ONT.

Just the same as Embodiment 8 of the present invention, Embodiment 9 provides the OLT that calculates the length of the fiber between the OLT itself and the ONU/ONT in a more precise way than the OLT in the prior art.

Furthermore, as compared with the OLT in Embodiment 8 of the present invention, the OLT in Embodiment 9 of the present invention has an additional response time storage unit 906, which enables the OLT to locally store the actual response time of various ONUs/ONTs and enables the OLT to obtain the actual response time of an ONU/ONU from the data locally stored to calculate the length of the fiber between the OLT itself and the ONU/ONT.

### Embodiment 10

Figure 11 shows a schematic structure of an OLT according to Embodiment 10 of the present invention, which may include a message exchange unit 1001, a time counting unit 1002, a response time storage unit 1003 and a computation unit 1004.

The message exchange unit 1001 is adapted to exchange messages with ONUs/ONTs. The process of message exchange with the ONU/ONT includes sending a ranging request to the ONU/ONT and receiving a ranging response message from the ONU/ONT.

The time counting unit 1002 is adapted to determine the duration of message exchange between the message exchange unit 1001 and the ONU/ONT. When the message exchange unit 1001 sends a ranging request to the ONU/ONT, the time counting unit 902 starts counting time. When the message exchange unit 1001 receives a ranging response message from the ONU/ONT, the time counting unit 804 stops counting time. The counting duration equals the difference between the start time of time counting and the end time of time counting;

The response time storage unit 1003 is adapted to store the actual response time of various ONUs/ONTs. The actual response time of each ONU/ONT stored in the response time storage unit 1003 may be manually set but is not limited to manual setting.

The actual response time of each ONU/ONT stored in the response time storage unit 1003 corresponds to the identifier of each ONU/ONT, or corresponds to the brand and model of each ONU/ONT. The response time storage unit 1003 may be, but is not limited to, a Flash or other similar storage unit.

The computation unit 1004 is adapted to determine the length of the fiber between the ONU/ONT and the OLT according to the duration determined by the time counting unit 1002, the actual response time of the ONU/ONT stored in the response time storage unit 1003, the pre-equalization delay assigned by the OLT to the ONU/ONT, and the sending start time assigned by the OLT to the ONU/ONT. The basic principles of the computation unit 1004 are the same as those of the computation unit 805 in Embodiment 8 of the present invention and the computation unit 907 in Embodiment 9 of the present invention.

The total processing delay of the ONU/ONT is the sum of the actual response time of the ONU/ONT that is stored in the response time storage unit 1003, the pre-equalization delay of the ONU/ONT that is already known to the OLT, and the sending start time of the ONU/ONT that is already known to the OLT. The pre-equalization delay of the ONU/ONT and the sending start time of the ONU/ONT are the processing delay assigned by the OLT to the ONU/ONT.

In Embodiment 10 of the present invention, the OLT can query the records stored in the response time storage unit 1004 to obtain the actual response times of the ONUs/ONTs so as to calculate the length of the fiber between itself and the ONUs/ONTs.

As can be seen from above, the response time storage unit 1003 stores the exact actual response time of each ONU/ONT. During the calculation, the OLT queries the records stored in the response time storage unit 1003 to obtain the actual response times of the ONUs/ONTs and then calculates the exact lengths of the fiber between the OLT itself and the ONUs/ONTs based on the actual response time of the ONU/ONT. Obviously, compared with the OLT in the prior art that calculates the length of the fiber between the OLT and the ONU/ONT using an approximate value of the actual response time within the error range defined by the protocol, the OLT in Embodiment 10 of the present invention calculates the length of the fiber between the OLT itself and the ONU/ONT in a more precise way.

It should be noted that the OLT in Embodiment 10 of the present invention may be in a form of hardware or a software function module. The device in Embodiment 10 of the present invention may be sold or used as an independent product, or may be stored in an accessible storage media in a computer.

The following detailed descriptions are about an optical network system according to the embodiments of the present invention (Embodiment 11 is taken as an example).

### Embodiment 11

Figure 12 shows a schematic structure of a communication system (the above-mentioned optical network system) according to Embodiment 11 of the present invention, which may include an ONU/ONT 1101 and an OLT 1102.

The ONU/ONT 1101 is adapted to exchange messages with the OLT 1102.

The ONU/ONT 1101 may adapt a structure shown in Figure 6 in Embodiment 6 of the present invention or a structure shown in Figure 8 in Embodiment 7 of the present invention.

The OLT 1102 is adapted to exchange messages with the ONU/ONT 1101, determine the duration of message exchange with the ONU/ONT 1101, and determine the length of the fiber between itself and the ONU/ONT1001 according to the determined actual response time of the ONU/ONT 1101, the pre-equalization delay assigned to the ONU/ONT 1001 and the sending start time.

The OLT 1102 may use a structure shown in Figure 9 in Embodiment 8 of the present invention, or a structure shown in Figure 10 in Embodiment 9 of the present invention, or a structure shown in Figure 11 in Embodiment 10 of the present invention.

Figure 13 shows a schematic structure of a communication system comprising an ONU/ONT 1201 and an OLT 1202.

As shown in Figure 13, the ONU/ONT 1201 may include a message exchange unit 12011 adapted to exchange messages with the OLT 1202. Specifically, the message exchange unit 12011 receives a ranging request from the message exchange unit 1001 of the OLT 1202 and returns a ranging response message to the message exchange unit 1101 of the OLT 1202.

The OLT 1202 may use a structure shown in Figure 11 in Embodiment 10 of the present invention. The OLT 1202 may include a message exchange unit 1001, a time counting unit 1003, a response time storage unit 1002, and a computation unit 1004. For details on the principles of the units, see the relevant descriptions in Embodiment 10 of the present invention.

As can be seen from above, in a communication system shown in Figure 13, the response time storage unit 1003 of the OLT 1202 pre-stores the actual response times of ONUs/ONTs 1201 in various brands and models, or the actual response time of each ONU/ONT 1201. The OLT 1202 queries the records stored in the response time storage unit 1002 to obtain the actual response time of the ONU/ONT 1201, and then calculates the length of the fiber between the OTL 1202 itself and the ONU/ONT 1201 based on the actual response time of the ONU/ONT 1201. In the communication system shown in Figure 13, the precision of the measured length of the fiber between the OLT 1202 and the ONU/ONT 1201 is greatly improved as compared with that of the prior art.

Figure 14 shows a schematic structure of a communication system including the ONU/ONT shown in Figure 6 and the OLT shown in Figure 9.

As shown in Figure 14, the ONU/ONT 1301 may include the following units:
a receiving unit 601 adapted to receive messages sent by a sending unit 801 of the OLT 1302 (see the relevant descriptions concerning Embodiment 6 of the present invention for details);
a response time acquisition unit 602 (see the relevant descriptions concerning Embodiment 6 of the present invention for details on the principles of the response time acquisition unit 602);
a sending unit 604 adapted to send messages to a receiving unit 802 of the OLT 1302 (see the relevant descriptions concerning Embodiment 6 of the present invention for details).

The OLT 1302 may include a sending unit 801, a receiving unit 802, an interpretation unit 803, a time counting unit 804 and a computation unit 805. For details on the principles of these units, see the relevant descriptions concerning Embodiment 6 of the present invention.

Obviously, in the communication system shown in Figure 14, the sending unit 604 of the ONU/ONT 1301 can report the actual response time of the ONU/ONT 1301, or the sum of the actual response time and the pre-equalization delay assigned by the OLT 1302 to the ONU/ONT 1301, or the sum of the actual response time and the sending start time assigned by the OLT 1302 to the ONU/ONT 1301, or the sum of the actual response time, the pre-equalization delay assigned by the OLT 1302 to the ONU/ONT 1301 and the sending start time to the OLT 1302, so that the interpretation unit 803 of the OLT 1302 can interpret the reported information to obtain the relevant information and then the computation unit 805 can measure the length of the fiber between the OLT 1302 and the ONU/ONT 1301 according to the information obtained after the interpretation. In the prior art, the OLT calculates the length of the fiber between the OLT itself and the ONU/ONT by using any value of the response time of the ONU/ONT within the error range defined in the protocol as the actual response time of the ONU/ONT. Obviously, in a communication system shown in Figure 13, the precision of the measured length of the fiber between the OLT 1202 and the ONU/ONT 1201 is greatly improved as compared with that of the prior art.

Furthermore, in the communication system shown in Figure 14, manual setting is not required. Therefore, the communication system shown in Figure 14 has higher expandability than the communication system shown in Figure 13.

Similarly, a communication system may comprise an ONU/ONT shown in Figure 6 and an OLT shown in Figure 10 or Figure 11, or may comprise an ONU/ONT shown in Figure 8 and an OLT shown in Figure 9, or Figure 10, or Figure 11. For details on the ONUs/ONTs and the OLTs, see the relevant descriptions concerning the embodiments of the present invention.

In sum, in the communication system according to the embodiments of the present invention, the OLT may obtain a highly-precise length of the fiber between the OLT itself and the ONU/ONT through calculation using the actual response time of the ONU/ONT. In the prior art, the OLT calculates the length of the fiber between the OLT itself and the ONU/ONT by using any value of the response time of the ONU/ONT within the error range defined in the protocol as the actual response time of the ONU/ONT. Obviously, in the communication system according to the embodiments of the present invention, the precision of the measured length of the fiber between the OLT and the ONU/ONT is greatly improved as compared with that of the prior art.

While this invention has been particularly shown and described with reference to preferred embodiments thereof, it will be understood by those skilled in the art that various changes in form and details may be made therein without departing from the scope of the invention.

## Claims

1. A method for measuring a length of a fiber between an optical line terminal and an optical network device at a subscriber side, comprising:
sending (302, 404, 501) a ranging request message from the optical line terminal to the optical network device;
receiving (304, 406, 502) a ranging response message responding to the ranging request message from the optical network device;
determining (304, 406, 504) a duration between a time when sending the ranging request message and a time when receiving the ranging response message ; **characterized by** comprising:
obtaining (301, 305, 402, 503) an actual response time of the optical network device and a waiting time assigned by the optical line terminal to the optical network device so that an uplink signal of the optical network device arrives at the optical line terminal with a correct phase to avoid communication conflicts, wherein obtaining the actual response time comprises: receiving information including the actual response time reported by the optical network device, said information being carried in a message, and obtaining the actual response time from the message carrying the actual response time ; and
determining (305, 407, 505) the length of the fiber based on the duration, the waiting time, and the actual response time, wherein a total processing delay of the optical network device between receiving the ranging request message and transmitting the ranging response message is a sum of the actual response time and the waiting time.

2. The method according to claim 1, wherein the waiting time is composed of a pre-equalization delay assigned by the optical line terminal to the optical network device and a sending start time assigned by the optical line terminal to the optical network device.

3. The method according to claim 2, further comprising store the actual response time of the optical network device in a local record of the optical line terminal after receiving the message carrying the actual response time; and
obtaining (305) the actual response time of the optical network device by querying the local record.

4. The method according to claim 2 or 3, wherein the ranging request message is sent after the optical line terminal receives the message carrying the actual response time.

5. The method according to claim 4, wherein the method further comprises: sending a request message to the optical network device for requesting the actual response time before receiving the message carrying the actual response time.

6. The method according to claim 2, 4 or 5, wherein the message carrying the actual response time is a physical layer operation administration and maintenance message.

7. The method according to claim 2 or 4 or 5, wherein the message carrying the actual response time is an optical network unit management and control interface message.

8. The method according to claim 1 or 3 or 4, wherein the message carrying the actual response time is a data packet via a data channel.

9. The method according to claim 2, wherein the ranging request message includes the pre-equalization delay and the sending start time.

10. An optical line terminal, comprising:
a sending unit (801) that is adapted to send a ranging request message to an optical network device at a subscriber side;
a receive unit (802) that is adapted to receive a ranging response message responding to the ranging request message from the optical network device;
a time counting unit (804) that is adapted to determine a duration between sending the ranging request message and receiving the ranging response message; **characterized by** comprising:
an interpretation unit (803) that is adapted to obtain an actual response time of the optical network device by interpreting a message carrying the actual response time of the optical network device from the optical network device; and
a computation unit (805, 907) that is adapted to calculate a length of a fiber between the optical line terminal and the optical network device according to the duration and an actual total processing delay of the optical network device, wherein the actual total processing delay is composed of the actual response time of the optical network device and a waiting time, wherein the waiting time refers to a delay assigned by the optical line terminal to the optical network device so that an uplink signal of the optical network device arrives at the optical line terminal with a correct phase to avoid communication conflicts.

11. The optical line terminal according to claim 9, wherein the waiting time is composed of a pre-equalization delay assigned by the optical line terminal to the optical network device and a sending start time assigned by the optical line terminal to the optical network device.

12. The optical line terminal according to claim 10 or 11, further comprising a response time storage unit (906) that is adapted to store information relating to a processing delay of the optical network device that is obtained after the interpretation unit (803) interprets the message carrying the actual response time, wherein the information relating to the processing delay includes the actual response time.

13. The optical line terminal according to claim 10 or 11 or 12, the message carrying the actual response time is a physical layer operation administration and maintenance message.

14. The optical line terminal according to claim 10 or 11 or 12, the message carrying the actual response time an optical network unit management and control interface message.

15. An optical network device, comprising:
a receiving unit (601) that is adapted to receive a ranging request message sent from an optical line terminal; **characterized by** comprising:
a response time acquisition unit (602) that is adapted to obtain an actual response time of the optical network device; and
a sending unit (604) that is adapted to send a ranging response message responding to the ranging request message and the actual response time to the optical line terminal so that the optical line terminal calculates a length of a fiber between the optical line terminal and the optical network device according to the actual response time, wherein a total processing delay between receiving the ranging request message and sending the ranging response message is composed of the actual response time and a waiting time, wherein the waiting time refers to a delay assigned by the optical line terminal to the optical network device so that an uplink signal of the optical network device arrives at the optical line terminal with a correct phase to avoid communication conflicts.

16. The optical network device according to claim 15, wherein the waiting time is composed of a pre-equalization delay assigned by the optical line terminal to the optical network device and a sending start time assigned by the optical line terminal to the optical network device.

17. The optical network device according to claim 15 or 16, further comprising a response time storage unit (605) adapted to store the actual response time, wherein the response time acquisition unit (602) is adapted to obtain the actual response time from the response time storage unit (605).

18. The optical network device according to claim 15 or 16 or 17, wherein the actual response time is initiatively sent to the optical line terminal after being successfully registered.

19. The optical network device according to claim 15 or 16, wherein the actual response time is transmitted before the optical network device receives the ranging request message.

20. The optical network device according to one of the claims 15 to 19, wherein the sending unit (604) is adapted to send the actual response time in a physical layer operation administration and maintenance message.

21. The optical network device according to one of the claims 15 to 19, wherein the sending unit (604) is adapted to send the actual response time in an optical network unit management and control interface message.

22. A communication system, comprising an optical line terminal according to any one of claims 10 to 14, or comprising an optical network device according to any one of claims 15 to 21.

## Patentansprüche

1. Verfahren zum Messen einer Länge einer Faser zwischen einem Endgerät einer optischen Leitung und einer Vorrichtung eines optischen Netzes auf einer Teilnehmerseite, das enthält:
Senden (302, 404, 501) einer Bereichsanforderungsnachricht von dem Endgerät einer optischen Leitung zu der Vorrichtung eines optischen Netzes;
Empfangen (304, 406, 502) einer Bereichsantwortnachricht, die eine Antwort auf die Bereichsanforderungsnachricht bildet, von der Vorrichtung eines optischen Netzes;
Bestimmen (304, 406, 504) einer Dauer zwischen einer Zeit, zu der die Bereichsanforderungsnachricht gesendet wird, und einer Zeit, zu der die Bereichsantwortnachricht empfangen wird; **dadurch gekennzeichnet, dass** es enthält:
Erhalten (301, 305, 402, 503) einer tatsächlichen Antwortzeit der Vorrichtung eines optischen Netzes und einer Wartezeit, die von dem Endgerät einer optischen Leitung der Vorrichtung eines optischen Netzes zugewiesen wird, so dass ein Aufwärtsstreckensignal der Vorrichtung eines optischen Netzes bei dem Endgerät einer optischen Leitung mit einer korrekten Phase ankommt, um Kommunikationskonflikte zu vermeiden, wobei das Erhalten der tatsächlichen Antwortzeit enthält: Empfangen von Informationen, die die tatsächliche Antwortzeit enthalten, die von der Vorrichtung eines optischen Netzes gemeldet wird, wobei die Informationen in einer Nachricht transportiert werden, und Erhalten der tatsächlichen Antwortzeit von der die tatsächliche Antwortzeit tragenden Nachricht; und
Bestimmen (305, 407, 505) der Länge der Faser anhand der Dauer, der Wartezeit und der tatsächlichen Antwortzeit, wobei eine gesamte Verarbeitungsverzögerung der Vorrichtung eines optischen Netzes zwischen dem Empfangen der Bereichsanforderungsnachricht und dem Senden der Bereichsantwortnachricht eine Summe aus der tatsächlichen Antwortzeit und der Wartezeit ist.

2. Verfahren nach Anspruch 1, wobei die Wartezeit aus einer Vorentzerrungsverzögerung, die von dem Endgerät einer optischen Leitung der Vorrichtung eines optischen Netzes zugewiesen wird, und aus einer Sendestartzeit, die von dem Endgerät einer optischen Leitung der Vorrichtung eines optischen Netzes zugewiesen wird, aufgebaut ist.

3. Verfahren nach Anspruch 2, das ferner enthält: Speichern der tatsächlichen Antwortzeit der Vorrichtung eines optischen Netzes in einer lokalen Aufzeichnung des Endgeräts einer optischen Leitung nach dem Empfangen der die tatsächliche Antwortzeit tragenden Nachricht; und
Erhalten (305) der tatsächlichen Antwortzeit der Vorrichtung eines optischen Netzes durch Abfragen der lokalen Aufzeichnung.

4. Verfahren nach Anspruch 2 oder 3, wobei die Bereichsanforderungsnachricht gesendet wird, nachdem das Endgerät einer optischen Leitung die die tatsächliche Antwortzeit tragende Nachricht empfangen hat.

5. Verfahren nach Anspruch 4, wobei das Verfahren ferner enthält: Senden einer Anforderungsnachricht zu der Vorrichtung eines optischen Netzes, um die tatsächliche Antwortzeit anzufordern, bevor die die tatsächliche Antwortzeit tragende Nachricht empfangen wird.

6. Verfahren nach Anspruch 2, 4 oder 5, wobei die die tatsächliche Antwortzeit tragende Nachricht eine Nachricht für das Betriebsmanagement und die Wartung der physikalischen Schicht ist.

7. Verfahren nach Anspruch 2 oder 4 oder 5, wobei die die tatsächliche Antwortzeit tragende Nachricht eine Management- und Steuerschnittstellennachricht einer Einheit eines optischen Netzes ist.

8. Verfahren nach Anspruch 1 oder 3 oder 4, wobei die die tatsächliche Antwortzeit tragende Nachricht ein Datenpaket über einen Datenkanal ist.

9. Verfahren nach Anspruch 2, wobei die Bereichsanforderungsnachricht die Vorentzerrungsverzögerung und die Sendestartzeit enthält.

10. Endgerät einer optischen Leitung, das enthält:
eine Sendeeinheit (801), die dazu ausgelegt ist, eine Bereichsanforderungsnachricht zu einer Vorrichtung eines optischen Netzes auf einer Teilnehmerseite zu senden;
eine Empfangseinheit (802), die dazu ausgelegt ist, eine Bereichsantwortnachricht, die eine Antwort auf die Bereichsanforderungsnachricht bildet, von der Vorrichtung eines optischen Netzes zu empfangen;
eine Zeitzähleinheit (804), die dazu ausgelegt ist, eine Dauer zwischen dem Senden der Bereichsanforderungsnachricht und dem Empfangen der Bereichsantwortnachricht zu bestimmen; **dadurch gekennzeichnet, dass** es enthält:
eine Interpretationseinheit (803), die dazu ausgelegt ist, eine tatsächliche Antwortzeit der Vorrichtung eines optischen Netzes durch Interpretieren einer die tatsächliche Antwortzeit der Vorrichtung eines optischen Netzes tragenden Nachricht von der Vorrichtung eines optischen Netzes zu erhalten; und
eine Recheneinheit (805, 907), die dazu ausgelegt ist, eine Länge einer Faser zwischen dem Endgerät einer optischen Leitung und der Vorrichtung eines optischen Netzes in Übereinstimmung mit der Dauer und einer tatsächlichen gesamten Verarbeitungsverzögerung der Vorrichtung eines optischen Netzes zu berechnen,
wobei die tatsächliche gesamte Verarbeitungsverzögerung aus der tatsächlichen Antwortzeit der Vorrichtung eines optischen Netzes und einer Wartezeit gebildet ist, wobei die Wartezeit auf eine Verzögerung bezogen ist, die von dem Endgerät einer optischen Leitung der Vorrichtung eines optischen Netzes zugewiesen wird, so dass ein Aufwärtsstreckensignal der Vorrichtung eines optischen Netzes bei dem Endgerät einer optischen Leitung mit einer korrekten Phase ankommt, um Kommunikationskonflikte zu vermeiden.

11. Endgerät einer optischen Leitung nach Anspruch 9, wobei die Wartezeit aus einer Vorentzerrungsverzögerung, die von dem Endgerät einer optischen Leitung der Vorrichtung eines optischen Netzes zugewiesen wird, und einer Sendestartzeit, die von dem Endgerät einer optischen Leitung der Vorrichtung eines optischen Netzes zugewiesen wird, gebildet ist.

12. Endgerät einer optischen Leitung nach Anspruch 10 oder 11, das ferner eine Antwortzeit-Speichereinheit (906) enthält, die dazu ausgelegt ist, Informationen, die auf eine Verarbeitungsverzögerung der Vorrichtung eines optischen Netzes bezogen sind und erhalten werden, nachdem die Interpretationseinheit (803) die die tatsächliche Antwortzeit tragende Nachricht interpretiert hat, zu speichern, wobei die Informationen, die auf die Verarbeitungsverzögerung bezogen sind, die tatsächliche Antwortzeit enthalten.

13. Endgerät einer optischen Leitung nach Anspruch 10 oder 11 oder 12, wobei die die tatsächliche Antwortzeit tragende Nachricht eine Nachricht für das Betriebsmanagement und die Wartung der physikalischen Schicht ist.

14. Endgerät einer optischen Leitung nach Anspruch 10 oder 11 oder 12, wobei die die tatsächliche Antwortzeit tragende Nachricht eine Management- und Steuerschnittstellennachricht einer Einheit eines optischen Netzes ist.

15. Vorrichtung eines optischen Netzes, die enthält:
eine Empfangseinheit (601), die dazu ausgelegt ist, eine von einem Endgerät einer optischen Leitung gesendete Bereichsanforderungsnachricht zu empfangen; **dadurch gekennzeichnet, dass** es enthält:
eine Antwortzeit-Erfassungseinheit (602), die dazu ausgelegt ist, eine tatsächliche Antwortzeit der Vorrichtung eines optischen Netzes zu erhalten; und
eine Sendeeinheit (604), die dazu ausgelegt ist, eine Bereichsantwortnachricht, die eine Antwort auf die Bereichsanforderungsnachricht bildet, und die tatsächliche Antwortzeit zu dem Endgerät einer optischen Leitung zu senden, so dass das Endgerät einer optischen Leitung eine Länge einer Faser zwischen dem Endgerät einer optischen Leitung und der Vorrichtung eines optischen Netzes in Übereinstimmung mit der tatsächlichen Antwortzeit berechnet, wobei eine gesamte Verarbeitungsverzögerung zwischen dem Empfangen der Bereichsanforderungsnachricht und dem Senden der Bereichsantwortnachricht aus der tatsächlichen Antwortzeit und einer Wartezeit gebildet ist, wobei die Wartezeit auf eine Verzögerung bezogen ist, die von dem Endgerät einer optischen Leitung der Vorrichtung eines optischen Netzes zugewiesen wird, so dass ein Aufwärtsstreckensignal der Vorrichtung eines optischen Netzes bei dem Endgerät einer optischen Leitung mit einer korrekten Phase ankommt, um Kommunikationskonflikte zu vermeiden.

16. Vorrichtung eines optischen Netzes nach Anspruch 15, wobei die Wartezeit aus einer Vorentzerrungsverzögerung, die von dem Endgerät einer optischen Leitung der Vorrichtung eines optischen Netzes zugewiesen wird, und aus einer Sendestartzeit, die von dem Endgerät einer optischen Leitung der Vorrichtung eines optischen Netzes zugewiesen wird, gebildet ist.

17. Vorrichtung eines optischen Netzes nach Anspruch 15 oder 16, die ferner eine Antwortzeit-Speichereinheit (605) enthält, die dazu ausgelegt ist, die tatsächliche Antwortzeit zu speichern, wobei die Antwortzeit-Erfassungseinheit (602) dazu ausgelegt ist, die tatsächliche Antwortzeit von der Antwortzeit-Speichereinheit (605) zu erhalten.

18. Vorrichtung eines optischen Netzes nach Anspruch 15 oder 16 oder 17, wobei die tatsächliche Antwortzeit initiativ zu dem Endgerät einer optischen Leitung gesendet wird, nachdem sie erfolgreich aufgezeichnet worden ist.

19. Vorrichtung eines optischen Netzes nach Anspruch 15 oder 16, wobei die tatsächliche Antwortzeit gesendet wird, bevor die Vorrichtung eines optischen Netzes die Bereichsanforderungsnachricht empfängt.

20. Vorrichtung eines optischen Netzes nach einem der Ansprüche 15 bis 19, wobei die Sendeeinheit (604) dazu ausgelegt ist, die tatsächliche Antwortzeit in einer Nachricht für das Betriebsmanagement und die Wartung der physikalischen Schicht zu senden.

21. Vorrichtung eines optischen Netzes nach einem der Ansprüche 15 bis 19, wobei die Sendeeinheit (604) dazu ausgelegt ist, die tatsächliche Antwortzeit in einer Management- und Steuerschnittstellennachricht einer Einheit eines optischen Netzes zu senden.

22. Kommunikationssystem, das ein Endgerät einer optischen Leitung nach einem der Ansprüche 10 bis 14 enthält oder eine Vorrichtung eines optischen Netzes nach einem der Ansprüche 15 bis 21 enthält.

## Revendications

1. Procédé de mesure d'une longueur d'une fibre entre un terminal de ligne optique et un dispositif de réseau optique côté abonné, comprenant :
l'envoi (302, 404, 501) d'un message de demande de distance par le terminal de ligne optique au dispositif de réseau optique ;
la réception (304, 406, 502) d'un message de réponse de distance en réponse au message de demande de distance depuis le dispositif de réseau optique ;
la détermination (304, 406, 504) d'une durée entre un temps d'envoi du message de demande de distance et un temps de réception du message de réponse de distance ;
**caractérisé en ce qu'**il comprend :
l'obtention (301, 305, 402, 503) d'un temps de réponse réel du dispositif de réseau optique et d'un temps d'attente assigné par le terminal de ligne optique au dispositif de réseau optique de telle sorte qu'un signal de liaison montante du dispositif de réseau optique arrive au terminal de ligne optique avec une phase correcte afin d'éviter des conflits de communication, dans lequel l'obtention du temps de réponse réel comprend : la réception d'informations comportant le temps de réponse réel communiqué par le dispositif de réseau optique, lesdites informations étant acheminées dans un message, et l'obtention du temps de réponse réel à partir du message portant le temps de réponse réel ; et
la détermination (305, 407, 505) de la longueur de la fibre en fonction de la durée, du temps d'attente, et du temps de réponse réel, dans lequel un retard de traitement total du dispositif de réseau optique entre la réception du message de demande de distance et la transmission du message de réponse de distance est une somme du temps de réponse réel et du temps d'attente.

2. Procédé selon la revendication 1, dans lequel le temps d'attente est composé d'un retard de pré-égalisation assigné par le terminal de ligne optique au dispositif de réseau optique et d'un temps de début d'envoi assigné par le terminal de ligne optique au dispositif de réseau optique.

3. Procédé selon la revendication 2, comprenant en outre la mémorisation du temps de réponse réel du dispositif de réseau optique dans un enregistrement local du terminal de ligne optique après la réception du message portant le temps de réponse réel ; et l'obtention (305) du temps de réponse réel du dispositif de réseau optique en interrogeant l'enregistrement local.

4. Procédé selon la revendication 2 ou 3, dans lequel le message de demande de distance est envoyé après que le terminal de ligne optique ait reçu le message portant le temps de réponse réel.

5. Procédé selon la revendication 4, comprenant en outre : l'envoi d'un message de demande au dispositif de réseau optique pour demander le temps de réponse réel avant de recevoir le message portant le temps de réponse réel.

6. Procédé selon la revendication 2, 4 ou 5, dans lequel le message portant le temps de réponse réel est un message d'opération, d'administration et de maintenance de couche physique.

7. Procédé selon la revendication 2 ou 4 ou 5, dans lequel le message portant le temps de réponse réel est un message d'interface de gestion et de commande d'unité de réseau optique.

8. Procédé selon la revendication 1 ou 3 ou 4, dans lequel le message portant le temps de réponse réel est un paquet de données transmis par l'intermédiaire d'un canal de données.

9. Procédé selon la revendication 2, dans lequel le message de demande de distance comporte le retard de pré-égalisation et le temps de début d'envoi.

10. Terminal de ligne optique, comprenant :
une unité d'envoi (801) adaptée pour envoyer un message de demande de distance à un dispositif de réseau optique côté abonné ;
une unité de réception (802) adaptée pour recevoir un message de réponse de distance en réponse au message de demande de distance depuis le dispositif de réseau optique ;
une unité de comptage de temps (804) adaptée pour déterminer une durée entre l'envoi du message de demande de distance et la réception du message de réponse de distance ; **caractérisé en ce qu'**il comprend :
une unité d'interprétation (803) adaptée pour obtenir un temps de réponse réel du dispositif de réseau optique en interprétant un message portant le temps de réponse réel du dispositif de réseau optique depuis le dispositif de réseau optique ; et
une unité de calcul (805, 907) adaptée pour calculer une longueur d'une fibre entre le terminal de ligne optique et le dispositif de réseau optique en fonction de la durée et d'un retard de traitement total réel du dispositif de réseau optique, dans lequel le retard de traitement total réel est composé du temps de réponse réel du dispositif de réseau optique et d'un temps d'attente, le temps d'attente se référant à un retard assigné par le terminal de ligne optique au dispositif de réseau optique de telle sorte qu'un signal de liaison montante du dispositif de réseau optique arrive au terminal de ligne optique avec une phase correcte afin d'éviter des conflits de communication.

11. Terminal de ligne optique selon la revendication 9, dans lequel le temps d'attente est composé d'un retard de pré-égalisation assigné par le terminal de ligne optique au dispositif de réseau optique et d'un temps de début d'envoi assigné par le terminal de ligne optique au dispositif de réseau optique.

12. Terminal de ligne optique selon la revendication 10 ou 11, comprenant en outre une unité de mémorisation de temps de réponse (906) adaptée pour mémoriser des informations relatives à un retard de traitement du dispositif de réseau optique qui sont obtenues après que l'unité d'interprétation (803) ait interprété le message portant le temps de réponse réel, les informations relatives au retard de traitement comportant le temps de réponse réel.

13. Terminal de ligne optique selon la revendication 10 ou 11 ou 12, le message portant le temps de réponse réel étant un message d'opération, d'administration et de maintenance de couche physique.

14. Terminal de ligne optique selon la revendication 10 ou 11 ou 12, le message portant le temps de réponse réel étant un message d'interface de gestion et de commande d'unité de réseau optique.

15. Dispositif de réseau optique, comprenant:
une unité de réception (601) adaptée pour recevoir un message de demande de distance envoyé par un terminal de ligne optique ; **caractérisé en ce qu'**il comprend :
une unité d'acquisition de temps de réponse (602) adaptée pour obtenir un temps de réponse réel du dispositif de réseau optique ; et
une unité d'envoi (604) adaptée pour envoyer un message de réponse de distance en réponse au message de demande de distance et le temps de réponse réel au terminal de ligne optique de telle sorte que le terminal de ligne optique calcule une longueur d'une fibre entre le terminal de ligne optique et le dispositif de réseau optique en fonction du temps de réponse réel, dans lequel un retard de traitement total entre la réception du message de demande de distance et l'envoi du message de réponse de distance est composé du temps de réponse réel et d'un temps d'attente, le temps d'attente se référant à un retard assigné par le terminal de ligne optique au dispositif de réseau optique de telle sorte qu'un signal de liaison montante du dispositif de réseau optique arrive au terminal de ligne optique avec une phase correcte afin d'éviter des conflits de communication.

16. Dispositif de réseau optique selon la revendication 15, dans lequel le temps d'attente est composé d'un retard de pré-égalisation assigné par le terminal de ligne optique au dispositif de réseau optique et d'un temps de début d'envoi assigné par le terminal de ligne optique au dispositif de réseau optique.

17. Dispositif de réseau optique selon la revendication 15 ou 16, comprenant en outre une unité de mémorisation de temps de réponse (605) adaptée pour mémoriser le temps de réponse réel, dans lequel l'unité d'acquisition de temps de réponse (602) est adaptée pour obtenir le temps de réponse réel depuis l'unité de mémorisation de temps de réponse (605).

18. Dispositif de réseau optique selon la revendication 15 ou 16 ou 17, dans lequel le temps de réponse réel est envoyé initialement au terminal de ligne optique après avoir été correctement enregistré.

19. Dispositif de réseau optique selon la revendication 15 ou 16, dans lequel le temps de réponse réel est transmis avant que le dispositif de réseau optique ne reçoive le message de demande de distance.

20. Dispositif de réseau optique selon l'une quelconque des revendications 15 à 19, dans lequel l'unité d'envoi (604) est adaptée pour envoyer le temps de réponse réel dans un message d'opération, d'administration et de maintenance de couche physique.

21. Dispositif de réseau optique selon l'une quelconque des revendications 15 à 19, dans lequel l'unité d'envoi (604) est adaptée pour envoyer le temps de réponse réel dans un message d'interface de gestion et de commande d'unité de réseau optique.

22. Système de communication, comprenant un terminal de ligne optique selon l'une quelconque des revendications 10 à 14, ou comprenant un dispositif de réseau optique selon l'une quelconque des revendications 15 à 21.
